# EUROPEAN PATENT APPLICATION

(11) **EP 2 187 398 A1**
(43) Date of publication of application: **19.05.2010**
(21) Application number: 09011430.7
(22) Date of filing: 07.09.2009
(51) Int. Cl.: G11B 27/10, G11B 27/32, G11B 27/36, H04N 5/76

(54) **Playback apparatus for stored content and playback method for stored content**

(30) Priority: 18.11.2008 JP 2008294674
(71) Applicant: Kabushiki Kaisha Toshiba, Minato-ku Tokyo (JP)
(72) Inventor: Ushio, Yasuyuki, Tokyo (JP); Kamijima, Yuki, Tokyo (JP)
(74) Representative: HOFFMANN EITLE

(57) **Abstract**

A playback apparatus for a storage content which can automatically stop playbacking one or a plurality of content data stored in a storage medium without recognizing a stop code by playbacking the content data is provided. The stop code is added to the metadata differently from the content data and is stored in medium unit 11. Control unit 13, by using the stop code obtained from the metadata, can automatically stop playbacking the content data during the playback at a designated position. In addition, by random accessing the storage medium at a frame designated by the stop code, to cue up or to move to the broadcasting start point of the program can be performed instantaneously.

## Description

### CROSS REFERENCE TO RELATED APPLICATION

This application is based upon and claims the benefit of priority from Japanese Patent Application No. 2008-294674, filed on November 18, 2008, the entire contents of which are incorporated herein by reference.

### FIELD OF THE INVENTION

This invention relates to a playback apparatus for a stored content and a playback method for a stored content to playback the content such as video/audio content used for a broadcast program from a storage medium such as a hard disk drive.

### DESCRIPTION OF THE BACKGROUND

In a broadcast of a program, it is general to playback a program recorded in a storage medium from a broadcasting start point, and it is necessary to cue the storage medium at the broadcasting start point of the program (hereinafter called as "cue up") before broadcasting. In the case that a plurality of programs are recorded in one storage medium, the broadcasting start point is provided for each program, and the storage medium is automatically stopped at the broadcasting start point of the next program when the program is broadcasted (playbacked). By this, the playback apparatus can cue up to the broadcasting start point of the next program.

Conventionally, a magnetic tape has been generally used to record the program. The magnetic tape has a characteristic that a few seconds are required to actually stop after outputting a stop instruction. For this reason, in order to automatically stop the magnetic tape at the broadcasting start point of the program, it was necessary to record the data called as a stop code for a few frames at a few seconds before the broadcasting start point of the program. When the playback apparatus discriminates the stop code during the playback of the magnetic tape, the playback apparatus starts to perform the stop operation of the magnetic tape and automatically stops the magnetic tape at the few frames after discriminating the stop code, that is, at the broadcasting start point of the program.

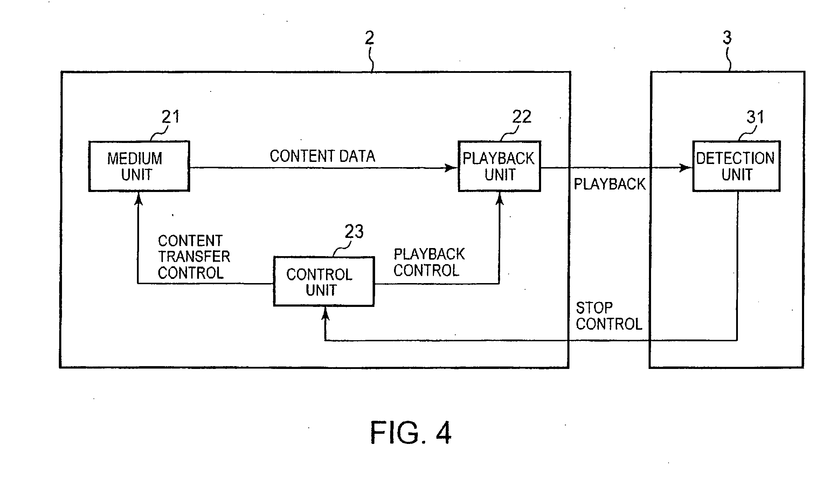

As shown in Fig. 4, a conventional playback apparatus 2 using a magnetic tape is provided with a medium unit 21, a playback unit 22 and a control unit 23. In order to realize to stop automatically the magnetic tape at a broadcasting start point of the program, the playback apparatus 2 is further provided with an external apparatus 3. A detection unit 31 recognizes a stop code from the data playbacked by the playback unit 22 and controls to stop playback unit 2. For this reason, the conventional playback apparatus 2 can not recognize the stop code without using the external apparatus 3.

In addition, as the magnetic tape is a storage media in which random access is impossible, in order to recognize the stop code, the playback apparatus needs the playback operation of the magnetic tape to search the stop code. In the case that the present playback position is distant from the position where the stop code is recorded, a lot of time is required to cue up.

As a prior art relating to this kind of playback apparatus, Patent Document 1 shows the construction to share the data by associating the control data with the video data via an absolute time. In addition, Patent Document 2 shows the construction which associates and records the content and the metadata. However, the playback apparatuses described in these Patent Documents 1 and 2 do not relate to stopping the content or cuing up.
[Patent Document 1] JP, P2007-235668A
[Patent Document 2] JP, P2001-216726A

As described above, as the conventional playback apparatus for the stored content uses the magnetic tape as the storage medium, in order to recognize the stop code, the playback operation of the magnetic tape for searching the stop code is required. In addition, in the case that the present playback position is distant from the position where the stop code is written, a lot of time is required to cue up.

### SUMMARY OF THE INVENTION

An object of the invention is to provide a playback apparatus for a stored content and a playback method for a stored content which can automatically perform the stop processing for one or a plurality of content data stored in a storage medium without recognizing a stop code by playbacking the storage medium.

A playback apparatus for a stored content according to the invention include a storage medium to store a content data of a frame structure; a stop code memory unit to store a stop code so as to stop playbacking the content data at an arbitrary position; a discrimination unit to discriminate a stop position for the content data based on the stop code obtained from the stop code memory unit when the content data is playbacked from the storage medium; and a stop control unit to stop playbacking the content data during the playback based on a discrimination result by the discrimination unit.

A playback method for a stored content to playback a content data from a storage medium which stores the content data of a frame structure according to a playback instruction, according to the invention includes a step to store a stop code for stopping playbacking the content data at an arbitrary position in a stop code memory unit; a step to obtain the stop code from the stop code memory unit and to discriminate a stop position for the playback of the content data when the content data is playbacked from the storage medium; and a step to stop the playback of the content date based on the discrimination result of the stop position.

### BRIEF DESCRIPTION OF THE DRAWINGS

Fig. 1 is a block diagram of a playback apparatus for a stored content according to an embodiment of the present invention.
Fig. 2 is a flow chart showing a playback control procedure of a control unit in the embodiment.
Fig. 3 is a timing chart in the case of playbacking the content data in the playback apparatus for the stored content of the embodiment.
Fig. 4 is a block diagram showing a conventional playback apparatus using a magnetic tape and an external apparatus.

### DETAILED DESCRIPTION OF THE INVENTION

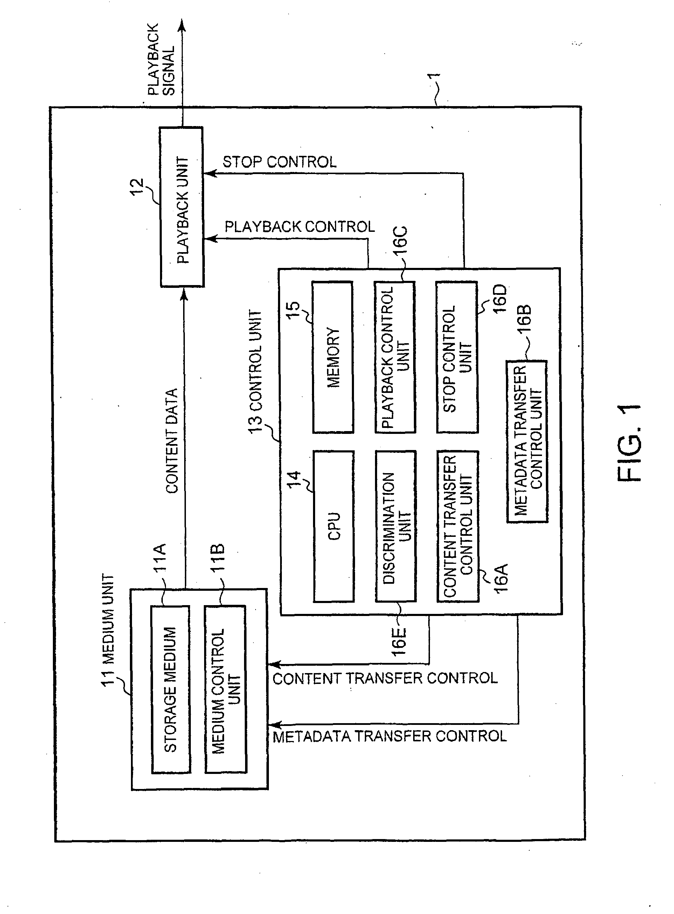

Hereinafter, embodiments of this invention will be described with reference to the drawings. In Fig. 1, a playback apparatus 1 for a storage content is a tape-less playback apparatus. The playback apparatus 1 is provided with a medium unit 11, a playback unit 12 and a control unit 13. The medium unit 11 is provided with storage medium 11A capable of random accessing, such as a HDD (Hard Disk Drive), and a medium control unit 11B. In addition, the control unit 13 is provided with a CPU (Central Processing Unit) 14 and a memory 15, and a program for executing each processing is stored in the memory 15. Each of the processing functions executed by the program is described in Fig. 1 as a content transfer control unit 16A, a metadata transfer control unit 16B, a playback control unit 16C, a stop control unit (a stop code control unit) 16D and a discrimination unit 16E. In addition, an operating input terminal (not shown), such as a key board and a mouse, is connected to the control unit 13.

The storage medium 11A in the medium unit 11 preliminarily stores a plurality of video content data which are encoded by compressing the program to be broadcasted. The content data has a frame structure. According to the content transfer control given from the content transfer control unit 16A, the medium control unit 11B reads out the designated content data from the storage medium 11A by a predetermined transfer unit and sends the read out content data to the playback unit 12. A playback mode of the playback unit 12 is designated by the playback control preliminarily given from the playback control unit 16C. The playback control designates the playback mode, such as, an ordinary playback, a slow playback, a double speed playback and a reverse playback. The playback unit 12 decodes the inputted content data, playbacks the content in a designated playback mode and outputs a playback signal from the playback apparatus 1.

In addition, the storage medium 11A stores the non-compression coded content relevant information (hereinafter, called as "metadata") differently from the content data. The metadata includes an identification code (ID), a format information, the number of the audio channels, a stop code and so on. The stop code includes an information of a stop position to stop playbacking the content data, and the stop position is represented by a frame number of the content data, for example. The stop code is inputted by the operating input terminal connected to the control unit 13 while editing the content data, and is stored in the storage medium 11A. In addition, in the case that the storage medium 11A is removable from a main body of the playback apparatus 1, the storage medium 11A in which the content data and the metadata including the stop code are preliminarily stored by other apparatus may be loaded in the playback apparatus 1. In addition, an offset value for displacing the stop position may be added to the stop code.

Hereinafter, a playback processing of the content data by using the stop code will be described.

A plurality of content data of the programs are stored in the storage medium 11A. The control unit 13 controls such that these plurality of content data are read out in a preliminary determined order and the read out content data are transferred to the playback unit 12.

In the case of playbacking the content data, the metadata transfer control unit 16B executes the metadata transfer control to the medium unit 11, and obtains the metadata including the stop code from the medium unit 11. The discrimination unit 16E analyzes the metadata to take out the stop code and discriminates the ID of the content data and the frame number of the stop position of the content data.

When the discrimination unit 16E discriminates the ID of the content data and the stop position of the content data, the content transfer control unit 16A executes the content transfer control to the medium unit 11, and in addition, discriminates whether or not the data to be transferred includes the frame data of the stop position. In the case that the data to be transferred includes the data of the stop position, the stop control unit 16D executes the stop control to playback unit 12 so as to stop playbacking at the frame of the stop position. In the case that the data to be transferred does not include the data of the stop position, stop control unit 16D does not execute the stop control to the playback unit 12.

In the content transfer control, the ID of the content data and the range of the data to be transferred are designated, and transferring of the data by a predetermined transfer unit is indicated to the medium unit 11. The medium unit 11 reads out the designated data from the storage medium 11A, and transmits the read out designated data to the playback unit 12. The playback unit 12 decodes the content data transmitted from the medium unit 11 to playback, however, the playback unit 12 stops the playback at the frame of the designated stop position when the playback unit 12 receives the stop control. In addition, in the case that the data to be transferred includes the data of the stop position, as the playback is stopped at the predetermined stop position, the subsequent content transfer control is not executed.

On the other hand, in the case that the data to be transferred does not include the data of the stop position, the next content transfer control is subsequently executed. The content transfer control unit 16A executes the content transfer control to the medium unit 11 for the next data, and in addition, discriminates whether or not the data to be transferred includes the data of the stop position. Subsequently, the same operation as described above is repeated to playback the content data.

As described above, the playback unit 12 stops the playback at the frame of the designated stop position during playbacking the content data transferred from the medium unit 11. In addition, content transfer control unit 16A stops the content transfer control at the position where the content transfer control for the data of the transfer unit including the data of the stop position is executed. By this, the automatic stop of the playback of the program content (the cue up for the next program) is executed.

In addition, a function which is realized with the magnetic tape playback apparatus and playbacks further the content data by a few frames after entering in the stop operation can be realized by adding an offset value to the stop code information. That is, the frame number which is displaced by only the offset value from the frame number designated by the stop code is treated as the stop position, and the content transfer control and the stop control are executed. Thereby, the content data can be further playbacked by the offset value, and then the playback can be stopped. In this case, it is necessary for the stop code to record the frame number of the data before only the number of the offset frames from the broadcasting start point of the program, as the stop position.

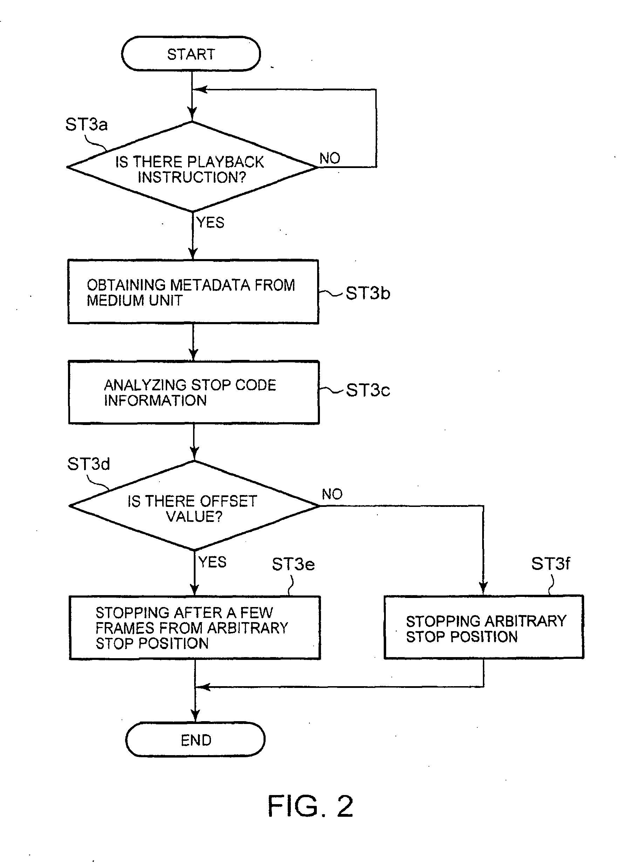

Fig. 2 is a flow chart showing a playback control procedure of control unit 13.

First, control unit 13 judges whether a playback instruction input is given from the operating input terminal (step ST3a). In the case that the playback instruction is given, the control unit 13 executes the metadata transfer control to the medium unit 11. And, the control unit 13 obtains metadata from medium unit 11 (step ST3b). The control unit 13 analyzes the metadata, extracts the stop code included in the metadata, and discriminates the stop position to stop playbacking the content data.

Next, the control unit 13 judges whether or not the offset value is added to the stop code information (step ST3d). In the case that the offset value is added, the control unit 13 judges that a position that is behind only the offset value from the stop position shown by the stop code is the stop position to stop the playbacking.

After the stop position is discriminated, the above-described content transfer control to the medium unit 11 and the above-described stop control to the playback unit 12 are executed. By this, the content data is read out from storage medium 11A and is playbacked in the playback unit 12. In addition, in the playback unit 12, the playback is stopped at the predetermined stop position. In the case that the offset value is not added to the stop code, the playback stops at the stop position designated by the stop code (step ST3f).

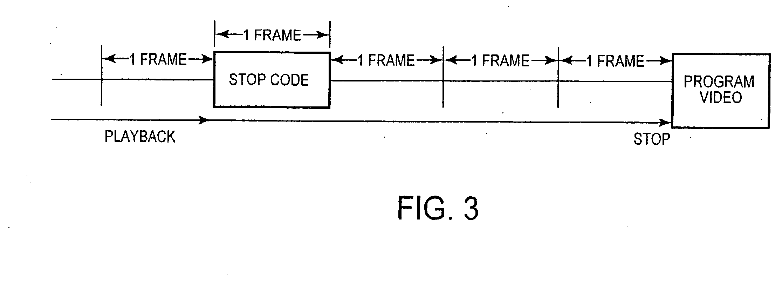

In the case that the offset value is added to the stop code, the content transfer control and the stop control are executed by assuming that the position added by the offset value is the stop position. By this, the playback is stopped at the position elapsed by the frames designated by the offset value from the stop position designated by the stop code (step ST3e). As shown in Fig. 3, the playback unit 12 stops the playback of the content data at the position elapsed by the offset value (in Fig. 3, three frames) from the stop position designated by the stop code.

According to the above-described construction, the playback apparatus 1 stores the stop code in the storage medium 11A as the metadata differently from the content data. As the playback apparatus 1 uses storage medium capable of random accessing and uses the stop code obtained from the metadata independent from the present stop position, the playback apparatus 1 can cue up or move to the broadcasting start point of the program by only random accessing the frame designated by the stop code, without playbacking the content data.

That is, the control unit 13 obtains the metadata from the storage medium 11A and discriminates the stop position for the playback at the discrimination unit 16E. Content transfer control unit 16A makes the medium unit 11 read out the content data of the predetermined transfer unit including the data of the stop position from the storage medium 11A by random accessing the storage medium 11A and transfer the read out content data to the playback unit 12. The playback unit 12 stops the playback at the prescribed position based on the stop control. As the content data of the transfer unit to be transferred includes the data of the stop position, the content transfer control unit 16A does not execute the content transfer control after this content transfer control, but stops reading out the content data from the storage medium 11A. By this, to cue up or to move to the broadcasting start point of the program can be executed and to read out and to playback the content data from the storage medium is stopped at the position.

Therefore, since the playback apparatus 1 can recognize the stop code without playbacking the content data unlike the playback apparatus using the magnetic tape, to cue up or to move to the broadcasting start point of the program can be executed in a short time.

In addition, by giving the offset value to the stop code as a parameter, the tape-less playback apparatus 1 can execute the operation of stopping the playback at the position where only a number of the frames designated by the offset value were playbacked, after playbacking the frames of the content data designated by the stop code.

The above-described embodiment explains the example which adds the offset value to the stop code information. But, the offset value is not necessary to be store preliminarily in the storage medium 11A as the metadata by addition to the stop code information. When the content data is playbacked, the offset value may be inputted to the control unit 13 from the operating input terminal and the control unit 13 may hold the offset value in the memory 15, for example. In this case, the control unit 13 acquires the frame number which shows the stop position designated by the stop code information included in the metadata from the medium unit 11, and the control unit 13 adds the frame number designated by the stop code information and the offset value. Then the control section 13 executes the stop control using the added frame number as a stop position.
By this, even in the case that the storage medium 11A which stores the content data and the stop code to which the offset value is not added is loaded to the playback apparatus 1, the offset value can be added at the time of the playback without editing the metadata.

Other embodiments or modifications of the present invention will be apparent to those skilled in the art from consideration of the specification and practice of the invention disclosed herein. It is intended that the specification and example embodiments be considered as exemplary only, with a true scope and spirit of the invention being indicated by the following.

## Claims

1. A playback apparatus for a stored content, comprising:
a storage medium to store a content data of a frame structure;
a stop code memory to store a stop code so as to stop playbacking the content data at an arbitrary position;
a discrimination unit to discriminate a stop position for the content data based on the stop code obtained from the stop code memory when the content data is playbacked from the storage medium; and
a stop control unit to stop playbacking the content data during the playback based on a discrimination result by the discrimination unit.

2. The playback apparatus for a stored content according to claim 1, wherein:
the stop code memory further stores an offset value so as to stop playbacking after frames of an arbitrary number from the stop position designated by the stop code; and
the stop control unit stops playbacking the content data during the playback after frames of the number designated by the offset value from the stop position designated by the stop code.

3. The playback apparatus for a stored content according to claim 1, wherein:
an offset value so as to stop playbacking the content data after frames of an arbitrary number from the stop position designated by the stop code is inputted to the playback apparatus for the stored content; and
the stop control unit stops playbacking the content data after frames of the number designated by the offset value from the stop position designated by the stop code.

4. The playback apparatus for a stored content according to claim 1, further comprising:
a medium control unit to read out the content data from the storage medium by a predetermined unit;
a content transfer control unit to make the medium control unit read out the content data from the storage medium by the predetermined unit;
wherein the content transfer control unit is configured to make the medium control unit stop reading out the content data from the storage medium based on the discrimination result.

5. A playback method for a stored content to playback a content data from a storage medium which stores the content data of a frame structure in accordance with a playback instruction, comprising:
a step to store a stop code for stopping playbacking the content data at an arbitrary position in a stop code memory;
a step to obtain the stop code from the stop code memory and to discriminate a stop position for the playback of the content data when the content data is playbacked from the storage medium; and
a step to stop the playback of the content date based on the discrimination result of the stop position.

6. A playback apparatus for a stored content, comprising:
a storage medium capable of random accessing to store a content data of a frame structure;
a medium control unit to read out the content data stored in the storage medium;
a stop code memory to store a stop code to stop playbacking the content data at an arbitrary position;
a discrimination unit to discriminate a stop position for the content data based on the stop code obtained from the stop code memory when the content data is playbacked from the storage medium; and
a content transfer control unit configured to control the medium control unit to read out the content data of a predetermined unit including the data of the stop position from the storage medium and to stop reading out the content data from the storage medium after the read out.
